# EUROPEAN PATENT APPLICATION

(11) **EP 4 202 349 A1**
(43) Date of publication of application: **28.06.2023**
(21) Application number: 22211349.0
(22) Date of filing: 05.12.2022
(51) Int. Cl.: F41G 7/00, B64F 5/60, F41G 7/22, G01S 7/40, G01S 7/497, G01S 13/88

(54) **ELECTRONIC CONTROL UNIT OF A SERVO-ASSISTED DEVICE FOR RECEIVING AND/OR TRANSMITTING AND/OR REFLECTING ELECTROMAGNETIC RADIATIONS**

(30) Priority: 27.12.2021 IT 202100032696
(71) Applicant: MBDA ITALIA S.p.A., 00131 Roma (IT)
(72) Inventor: BORZACCHIELLO, Domenico, I-00131 ROMA (IT); FERRARA, Gianluigi, I-00131 ROMA (IT); PRISCO, Gaetano, I-00131 Roma (IT)
(74) Representative: Carangelo, Pierluigi

(57) **Abstract**

An electronic control unit (10) of a servo-assisted device for receiving and/or transmitting and/or reflecting electromagnetic radiations, wherein:
- the electronic control unit (10) is adapted to generate a control signal to control the movement and/or position of the servo-assisted device (1) or a moving part (5) thereof;
- the electronic control unit (1) comprises, and/or is operationally connected to, at least one memory unit (11) where first data and/or test instructions are stored to perform operation and/or status checks of the electronic control unit (10) and/or the servo-assisted device (1);
- the electronic control unit (1) comprises a first communication interface (12) adapted and configured to transmit data and/or information related to checks performed, in particular data and/or information related to the results of the checks performed.

## Description

### FIELD OF THE INVENTION

The present invention relates to the technical field of servo-assisted devices for receiving and/or transmitting and/or reflecting electromagnetic radiations, such as antenna systems, optical systems, radar systems, for example. In particular, the present invention relates to an electronic control unit of a servo-assisted device for receiving and/or transmitting and/or reflecting electromagnetic radiations.

### BACKGROUND ART

Servo-assisted devices for receiving and/or transmitting and/or reflecting electromagnetic radiations are known and widely used. For example, these servo-assisted devices comprise receiving and/or transmitting antennas, for example of radar systems, or comprise electro-optical emitters and/or receivers which can be moved by one or more actuators to vary or stabilize the pointing direction, and in general to electronically control the movement of the aforesaid devices. The aforesaid servo-assisted devices can also include movable and/or deformable mirrors, for example orientator mirrors. A servo-assisted device of the type indicated above is disclosed, for example, in European Patent Application EP 2887455 A1 and European Patent Application EP 3106827 A1, which particularly disclose steerable antennas.

In order to vary the pointing direction, or in general to electronically control the position and/or the movement of servo-assisted devices of the type described above, the use is known of control systems comprising:
- one or more sensors adapted to acquire sensor data related to at least one motion and/or position parameter of a servo-assisted device for receiving and/or transmitting and/or reflecting electromagnetic radiations;
- at least one electronic control unit adapted to receive and process the sensor data to synthesize at least one control signal;
- at least one actuator embedded in, or operatively coupled to, the aforesaid servo-assisted device, adapted to receive said control signal to control the movement of the servo-assisted device.

Even though control systems of the type described are currently widely used, known control systems involve high test, trial and troubleshooting costs. In particular, developing and producing dedicated test or diagnostic apparatuses is expensive, especially when production increases occur. Furthermore, once the control systems, or the devices in which the latter are integrated, leave the production plants, it is particularly expensive or even not possible to carry out field tests on the systems or devices, for example real-time tests. In fact, the on-site transport of dedicated test equipment, which are not always available and the on-site transport of which still involves costs, is required.

Furthermore, once the control systems and/or the servo-assisted devices have been integrated into more complex devices, it is no longer possible to ensure the incorruptibility and reliability of the data and measurements which are acquired to carry out the tests.

It is a general object of the present description to provide an electronic control unit which allows completely, or at least partially, obviating the drawbacks described above with reference to the control systems of the prior art.

The aforesaid object, as well as other objects better appearing below, are achieved by an electronic control unit of a servo-assisted device for receiving and/or transmitting and/or reflecting electromagnetic radiations, as defined in claim 1. Preferred and advantageous embodiments of the aforesaid electronic control unit are defined in the appended dependent claims.

The invention will be better understood from the following detailed description of particular embodiments thereof, given by way of non-limiting example, with reference to the accompanying drawings briefly described in the following paragraphs.

### BRIEF DESCRIPTION OF THE DRAWINGS

Figure 1 shows an exemplary diagram of a non-limiting embodiment of a possible system comprising a servo-assisted device.
Figure 2 shows a three-dimensional view of a non-limiting embodiment of the servo-assisted device embedded in the system in Figure 1.
Figure 3 shows a plan bottom view of a part of the servo-assisted device in Figure 2.
Figure 4 shows a three-dimensional view of a non-limiting embodiment of a power supply adapter which is removably couplable to the servo-assisted device in Figure 2.
Figure 5 shows a three-dimensional view of a non-limiting embodiment of a short-range wireless communication interface which is operably couplable, or integrated into, the servo-assisted device in Figure 2.

### DETAILED DESCRIPTION

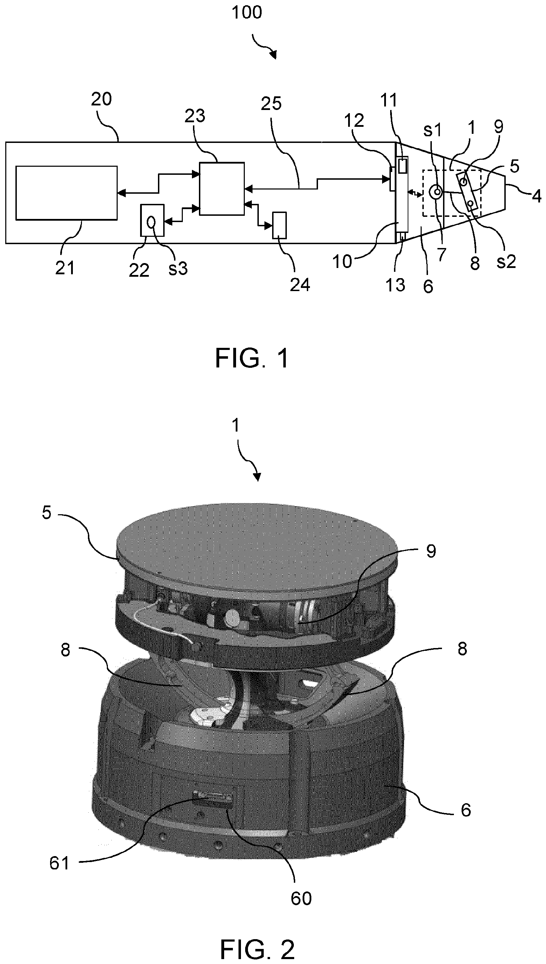

Figure 1 shows an exemplary and non-limiting embodiment of an avionics system 100. The avionics system 1 comprises a support platform 20, in particular an avionics platform 20, and a servo-assisted device 1 for receiving and/or transmitting and/or reflecting electromagnetic radiations mounted on the support platform 20. The avionics platform 20 can be a drone, airplane, rocket, missile, satellite, for example. From now on, for simplicity of disclosure, the servo-assisted device 1 for receiving and/or transmitting and/or reflecting electromagnetic radiations will also be referred to as a servo-assisted device 1 in short.

However, the embodiments of the present invention are not limited to avionics systems, since they can be extended to land or marine applications requiring the use of a servo-assisted device 1 for receiving and/or transmitting and/or reflecting electromagnetic radiations mounted on a stationary or movable support platform 20, for example mounted on or integrated into a land vehicle, a spacecraft or a watercraft or a fixed support. The land vehicle can be a motor vehicle, a van, a truck, a train, for example. The watercraft can be a boat or a ship, for example. The aforesaid land vehicle or watercraft or spacecraft can also be an autonomous drive vehicle.

The support platform 20 preferably comprises propulsion means 21, for example it comprises at least one propulsion motor 21. If the support platform 20 is an avionics platform, the aforesaid propulsion means 21 comprise, for example, a rocket motor, for example a solid or liquid propellant rocket motor. If the aforesaid avionics platform is a drone, the aforesaid propulsion means 21 comprise, for example, an electric motor. If the support platform 20 is a land platform, the aforesaid propulsion means 21 comprise, for example a thermal, electric or hybrid powertrain.

According to an advantageous embodiment, the avionics system 100 comprises an inertial measurement unit (IMU) 22 preferably arranged in or on the support platform 20. An inertial measurement unit is an electronic device which measures and signals the specific force of a body, the angular speed and sometimes, the orientation of the body, using a combination of sensors such as accelerometers, gyroscopes and at times, magnetometers. IMUs conventionally are used to maneuver aircraft (a heading and attitude reference system), including unmanned aerial vehicles (UAVs), among many others, and spacecraft, including satellites. In certain cases, IMUs are currently also employed in land vehicles, for example motor vehicles, or in watercraft.

According to an advantageous embodiment, the avionics system 100 comprises an electronic control module 23, preferably housed in the support platform 20 and operatively connected to the propulsion means 21 and to the inertial measurement unit 22 to control the movement of the support platform 20, in particular to maneuver the support platform 20. In order to control the movement of the support platform 20, the avionics system 100 can further comprise a long-range wireless data communication interface 24, arranged on board the support platform 20, operatively connected to the electronic control module 23 and operatively connectable to a remote control device, for example by means of a wireless data communication link, for example a terrestrial or satellite link.

The servo-assisted device 1 preferably comprises at least a first actuator 7 and at least one moving part 5, or payload 5, operatively connected to the first actuator 7 to be moved by the first actuator 7. The first actuator 7, for example, is, or comprises, a servomotor, for example, a brushless servomotor.

The moving part 5 comprises, for example at least one transmitting and/or receiving antenna device, or at least one optical device, for example a photosensor adapted to capture visual signals in the visible and/or infrared spectrum. The aforesaid optical device can comprise an image sensor. In alternative or additional embodiments, the aforesaid optical device comprises at least one optical emission device, such as a laser and/or an LED and/or an optical reflection device, for example, such as a mirror, for example. According to an embodiment, the moving part 5 comprises a video camera or a thermal camera.

According to an advantageous embodiment, the servo-assisted device 1 comprises a rotatable support member 8 which supports the moving part 5. For example, the aforesaid servo-assisted device 1 is made in accordance with European patent application EP 2887455 A1 entitled "Steerable antenna" or European patent application EP 3106827 A1 entitled "Transmission system for oscillating systems and steerable antenna comprising said transmission system". In the embodiments described in the aforesaid European patent applications, the servo-assisted device 1, in addition to the first actuator 7, comprises a second actuator 9. Each of such actuators 7, 9 is adapted to move the moving part 5 to rotate it respectively about a first and a second rotation axis, where said axes are preferably perpendicular to each other. The first and the second actuator 7, 9 are, for example, or comprise, servomotors, for example brushless servomotors. For example, the first actuator 7, by means of the rotating support member 8, allows rotating the moving part 5 and the second actuator 9 about the first rotation axis, and the second actuator 9 allows rotating the moving part 5 about the second rotation axis. It is therefore apparent that in this embodiment the rotating support member 8 supports both the moving part 5 and the second actuator 9.

The moving part 5 preferably comprises a transmitting and/or receiving array antenna, more preferably a radar antenna of a guide system of the support platform 20. The moving part 5 is orientable so as to rotate about the two aforesaid rotation axes. However, embodiments in which the moving part can be oriented so as to rotate about a single rotation axis or about three rotation axes are not to be excluded. According to a possible embodiment, the servo-assisted device 1, in particular the moving part 5, comprises a steerable antenna of a missile seeker.

According to a preferred and non-limiting embodiment, the servo-assisted device 1, or at least the moving part 5 thereof, is housed in a radome 4 fastened to the support platform 20. The radome 4 is, for example, ogive-shaped. According to a possible embodiment, the radome 4 is a radome made of ceramic material, as described, for example, in patent application EP 2817273.

According to a particularly preferred embodiment, the servo-assisted device 1 comprises a support base 6 and the moving part 5 is constrained to the support base 6 and is adapted to be controlled to be moved with respect to the support base 6, for example, to rotate with respect to the support base 6 about at least one rotation axis, for example about two mutually perpendicular rotation axes. According to one embodiment, the support base 6 is fastened to the support platform 20, for example at one end portion thereof. For example, the radome 4 is fastened to the support base 6 which, conveniently, can be at least partially plugged into the radome 6.

The avionics system 100 comprises at least one electronic control unit 10 of the servo-assisted device 1. The electronic control unit 10 is adapted and configured to control the movement and/or position of the servo-assisted device 1, in particular of the moving part 5. In particular, the electronic control unit 10 is adapted and configured to generate one or more control signals to control the movement and/or position of the servo-assisted device 1, in particular of the moving part 5.

According to one embodiment, the electronic control unit 10 is accommodated in the support base 6 of the servo-assisted device 1. For example, the support base 6 comprises an accommodation seat therein, in which the electronic control unit 10 is accommodated and fastened. For example, the electronic control unit 10 comprises at least one circuit board accommodated inside the support base 6. However, this does not exclude that the electronic control unit 10 can comprise further components which are arranged outside the support base 6.

The electronic control unit 10 comprises firmware components (or generally software components) and hardware components which are adapted and configured, i.e., programmed, to generate one or more control signals to control the movement and/or the position of the servo-assisted device 1, in particular of the moving part 5. Conveniently said firmware and hardware components are adapted and configured, i.e., programmed, to receive sensor data and process sensor data to generate one or more control signals.

The sensor data can be acquired and provided by one or more sensors s1, s2 of the servo-assisted device 1. Said one or more sensors s1, s2 allow acquiring position and/or movement parameters of the servo-assisted device 1, in particular of the moving part 5. Said one or more sensors s1, s2 can be both non-inertial sensors and inertial sensors.

For example, the servo-assisted device 1 comprises at least a first non-inertial sensor s1, for example an angular position sensor. Said angular position sensor s1 is, for example, an encoder integrated into the at least one actuator 7, which is, for example, a servomotor. According to a preferred embodiment, as already explained, the servo-assisted device 1 comprises two actuators 7, 9 and the aforesaid position sensor s1 is, or comprises, a pair of encoders, each of which is integrated into a respective actuator 7, 9, which are servomotors, for example.

Additionally or alternatively, the servo-assisted device 1 comprises an inertial sensor s2, which is a gyro sensor integrated into the servo-assisted device 1 and integral with the moving part 5, for example. For example, the sensor s2 is a biaxial inertial sensor.

In addition to non-inertial sensors s1 and/or inertial sensors s2, the sensor data can be provided to the electronic control unit 10 by at least one auxiliary sensor. Said auxiliary sensor preferably comprises one or more of the sensors from the following list: temperature sensor, humidity sensor, shock sensor, vibration sensor.

When the servo-assisted device 1 is arranged or installed on board the support platform 20, the sensor data can also be provided to the electronic control unit 10 by one or more sensors outside the servo-assisted device 1, for example by an inertial sensor s3 embedded in the IMU 22, which is a gyro sensor, for example.

According to a particularly advantageous embodiment, the electronic control unit 10 is or comprises one or more FPGAs (Field Programmable Array Logic). According to an alternative embodiment, the electronic control unit 10 is, or comprises, one or more Application Specific Integrated Circuits (ASICs) or one or more Digital Signal Processors (DSPs) .

The electronic control unit 10 is adapted and configured to generate, i.e., synthesize, at least one control signal of the servo-assisted device 1 and in particular of the moving part 5 and comprises, and/or is operatively connected to, at least one memory unit 11 in which first data and/or test instructions are stored for performing, preferably in real time, operation and/or status checks of the electronic control unit 10 and/or of the servo-assisted device 1. The aforesaid first data and/or test instructions allow the electronic control unit 10 to autonomously carry out diagnostic and/or test and/or troubleshooting checks. For this reason, for the purposes of this description, "data and/or test instructions" must not be understood in the limiting sense that said data and/or said instructions allow performing only test checks, since said checks can also generally be status and/or operation checks. The aforesaid data are computer data, and the instructions are computer instructions, for example, software code, programs, algorithms. The aforesaid data can be data useful for generating commands, i.e., control signals, parameters, thresholds, datasets which are representative of conditions of a correct or incorrect status and/or operation, check masks of actuation profiles of the servo-assisted device 1.

According to a preferred embodiment, the aforesaid memory unit 11 is, or comprises, a non-volatile memory unit.

For example, the aforesaid status and/or operation checks can comprise one or more of the checks v1-v5 of the following list:
v1) Checking the integrity of the electronic control unit 10;
v2) Checking the integrity of the servo-assisted device 1;
v3) Checking the integrity of the aforesaid first data and/or instructions, for example a parity check or checksum of the aforesaid data and/or instructions;
v4) Checking the presence and/or status and/or operation of one or more sensors s1, s2 of the servo-assisted device 1;
v5) Checking the response of one or more actuators 7, 9 of the servo-assisted device 1 to control signals which are synthesized and provided by the electronic control unit 10 in accordance with one or more operation patterns.

For example, with regard to the check v5, the first data and/or the test instructions comprise data which allow the electronic control unit 10 to:
- generate at least one control signal based on the first data and/or test instructions;
- provide the control signal to at least one actuator 7, 9 to move and/or position the servo-assisted device 1, in particular the moving part 5;
- detect at least one profile or one movement and/or positioning status of the servo-assisted device 1, in particular of the moving part 5, following the control signal provided;
- verify that the detected movement and/or positioning status or profile falls or not within an expected profile (or an expected mask) corresponding to conditions indicative of a correct operation of the servo-assisted device 1 and/or of the electronic control unit 10.

Said expected profile or said expected mask are advantageously stored in the memory unit 11.

The movement and/or positioning status is, for example, a pointing direction of the moving part or an angular position of the moving part 5. The movement profile is, for example, a sequential movement of the moving part 5, for example, a sinusoidal oscillation, with a square, triangular, trapezoidal, Archimedean wave, etc., which has one or more fixed or variable parameters, for example modulation parameters. For example, such parameters are or comprise the amplitude and/or frequency and/or phase and/or offset.

According to an advantageous embodiment, if the electronic control unit 10 is, or comprises, an FPGA, the aforesaid first data and/or test instructions are stored in a first memory area inside the FPGA. In this embodiment, it is advantageous to provide that the electronic control unit 10 comprises a second memory area which is outside the FPGA. In such a second memory area, second data and/or test instructions are stored or are storable which are additional to the first data and/or test instructions. The second data and/or test instructions allow, for example, performing additional checks with respect to those to be performed from the first data and/or test instructions, or updating test parameters or profiles of the checks to be performed by means of the first data and/or test instructions. The second memory area is operatively connected to the FPGA and is, for example, a Flash memory, in which additional data and/or instructions are storable with respect to the data and/or instructions stored in the FPGA. Said additional data and/or instructions can be updated, for example, by operatively connecting the electronic control unit 10 to an external programming device.

The electronic control unit 10 further comprises at least a first communication interface 12 adapted and configured to transmit data and/or information related to the checks performed, in particular data and/or information related to the outcome of the checks performed. These data or information related to the outcome of the checks performed can be general data or information, for example binary, such as, for example:
- Check OK or check KO;
- Intact data item or corrupted data item;
- Generated control signal OK or KO;
- Positioning of moving part 5 OK or KO;
- Movement speed of moving part 5 OK or KO;
- Sensor operating or not operating.

Alternatively or additionally, the aforesaid data or information related to the outcome of the checks can also be more detailed, for example, to indicate the reasons for which the outcome of a check is KO, which data are intact or corrupted, to indicate which positioning error was detected, how many times the checks were carried out, what are one or more conditions in which the checks were carried out (e.g., temperature and/or humidity, etc.), or to trace the movement/actuation profiles detected by the moving part 5, etc.

According to an embodiment, the first communication interface 12 is a wired interface or a wireless interface. If the first communication interface 12 is a wireless interface, this is advantageously a short-range wireless communication interface, for example a Bluetooth or Wi-Fi or Zigbee interface, etc.. Short-range wireless communication interface means a wireless interface with a wireless operating range of the order of one meter, or of about ten or a few tens of meters.

If the first communication interface 12 is a wired interface, an embodiment in which the electronic control unit 10 comprises a second communication interface 13, which is a short-range wireless communication interface, for example a Bluetooth or Wi-Fi or Zigbee interface, etc., is particularly advantageous. Said second communication interface 13 is particularly, but not exclusively, useful for carrying out status and/or operation checks after the electronic control unit 10 has been integrated into, or installed onto, a more complex system, such as the avionics system 100, for example, since, in this condition, the first communication interface 12 can already be used to operatively connect the electronic control unit 10 to the system 100, in particular to the support platform 20, for example, to the electronic control module 23.

The second communication interface 13 is integrated into the electronic control unit 10, or can be operatively connected to the electronic control unit 10 so as to be selectively fastened (therefore operatively connected) thereto and removed (therefore operatively disconnected) therefrom, for example by means of a first connector 61 of the electronic control unit 10 and a second connector 131 conjugated to the first connector 61 and included in the second communication interface 13.

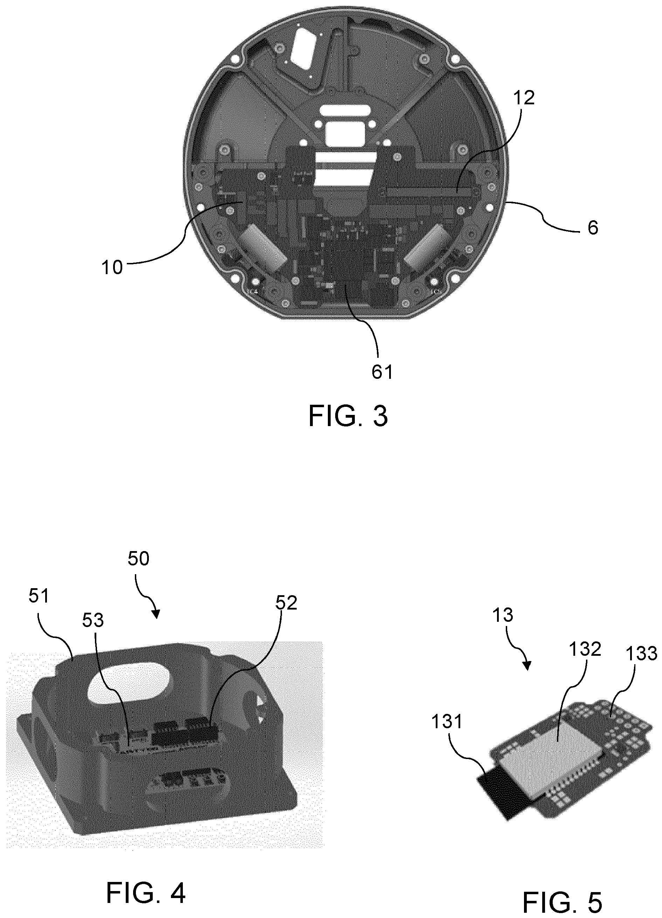

With reference to Figures 2 and 5, in the non-limiting example shown in such Figures, the second communication interface 13 is removably couplable to the electronic control unit 10. To this end, the electronic control unit 10 comprises a first connector 61, for example a female connector, and the second short-range wireless communication interface 13 comprises a second connector 131 conjugated to the first connector 61, for example a male connector to be reversibly plugged into the female connector 61. In the non-limiting example shown in Figure 2, the base 6 which accommodates the electronic control unit 10 comprises an opening 60 through which it is possible to access the first connector 61, and the second connector 131 can be inserted into said opening 60 to be coupled to the first connector 61. Furthermore, in the particular example shown in Figure 5, the second communication interface 13 comprises a chip, for example a System on Chip (SOC), mounted on a printed circuit board 133. Said chip is, for example, a Bluetooth chip.

The presence of at least one short-range wireless communication interface coupled to, or integrated into, the electronic control unit 10 has the advantage of being capable of simultaneously connecting a plurality of electronic control units 10 to the same external processing device adapted and configured to receive and/or communicate by means of a Human-Machine-Interface (HMI) the outcomes of the checks performed by the plurality of electronic control units 10. Said HMI comprises, for example, a graphical interface shown on a display. The external processing device is, for example, a general purpose device such as a simple personal computer, or even a tablet or smartphone on board which an application program is installed capable of interfacing with the electronic control unit 10. This does not exclude that, for example, in the case of several simultaneous massive checks, which simultaneously concern a large number (for example, ten or a few tens or more) of electronic control units 10 and/or several servo-assisted devices 1, the external processing device can be a more complex or more performing device, such as an industrial PC, for example.

Furthermore, the embodiment in which the short-range wireless communication interface is removably couplable to the electronic control unit 10 is particularly advantageous, since the removal thereof, after carrying out the test and/or diagnostic and/or troubleshooting checks, allows a subsequent safe use of the electronic control unit 10 and the associated servo-assisted device 1. Furthermore, the removability of the short-range wireless communication interface allows reusing the same wireless communication interface to sequentially test several electronic control units 10 or associated servo-assisted devices 1.

According to a particularly advantageous embodiment, the electronic control unit 10 is adapted and configured to be operatively coupled to an electric power adapter 50. The electric power adapter 50 is removably couplable to the electronic control unit 10 to provide the electrical supply required by the electronic control unit 10 to perform operation and/or status checks of the electronic control unit 10 and/or of the servo-assisted device 1. When the electronic control unit 10 and/or the servo-assisted device 1 are integrated into or installed in a more complex system, for example in the avionics system 100, the power is provided by the system 100 itself, for example, by the support platform 20. Therefore, the electric power adapter 50 is particularly useful for carrying out the aforesaid operation and/or status checks before integrating or installing on board the system 100. Preferably, the electric power adapter 50 also allows supporting the electronic control unit 10 and/or the servo-assisted device 1 while performing the aforesaid status and/or operation checks. For example, the electric power adapter 50 comprises a collar 51 within which the support base 6 can be at least partially plugged to stabilize the position of the support base 6.

According to an embodiment, the electric power adapter 50 comprises an electrical connection interface 52 operatively couplable to a conjugated electrical connection interface of the electronic control unit 10. Said conjugated electrical connection interface is, for example, a specific interface or is optionally integrated into the first communication interface 12 if this is a wired communication interface. In the latter case, the first communication interface 12 is a communication and power supply interface. Said communication and power supply interface 12 is accessible and/or available for the connection to an external processing device only when the electronic control unit 10 and/or the servo-assisted device 1 have not yet been installed on or integrated into the system 100, being used to operationally connect the electronic control unit 10 and/or the power assisted device to the system 100, in particular, to the support platform 20, for example, to the electronic control module 23.

From the above, it is apparent that an electronic control unit 10 of the type described above allows fully achieving the preset objects in terms of overcoming the drawbacks of the prior art.

The electronic control unit 10 is in fact capable of carrying out autonomously and in real time status and/or operation checks, having already on board the data and/or instructions useful for this purpose, and is capable of communicating to one or more external devices the outcomes of the checks carried out, thus without requiring expensive and complex dedicated apparatuses. At most, it can be useful to have available, in addition to the external processing device that can be a general purpose device, as explained, the electric power base 50, the cost of which is however relatively very low. Finally, it should be noted that the expression "carrying out autonomously" also includes embodiments in which carrying out the operation and/or status checks by the electronic control unit 10 does not occur in total autonomy but in partial autonomy, in the sense that, for example, the input of an operator and/or of an external device for launching and/or terminating them, or, for example, an input adapted to ask the electronic control unit 10 to carry out one or more specific status and/or operation checks of a set of possible status/operation checks, or, for example, the input of one or more parameters adapted to configure a status and/or operation check is required.

An electronic control unit 10 as described above allows minimizing the possibility of contaminating the measurements, acquired during the test and inspection step, and therefore correctly evaluating the performance. This feature, which is unprecedented with respect to the classic solutions, allows reducing, during production, both non-recurring costs (development of typical dedicated test systems to cope with production peaks or increases) and recurring costs in terms of hours of inspection and failure analysis.

The availability of a test dataset stored in a memory, for example in a non-volatile memory, and not contaminated by the measurement system, makes it particularly suitable for machine learning algorithms.

Finally, the possibility of carrying out tests on board the electronic control unit 10 allows diagnostics directly in the field without having to provide for a test system on site or to bring the system back.

The aforesaid advantages are even more apparent when the electronic control unit 10 is, or comprises, an FPGA.

Without prejudice to the principle of the invention, the embodiments and the constructional details may be broadly varied with respect to the above description merely given by way of a non-limiting example, without departing from the scope of the invention as defined in the appended claims.

## Claims

1. An electronic control unit (10) of a servo-assisted device for receiving and/or transmitting and/or reflecting electromagnetic radiations, wherein:
- the electronic control unit (10) is adapted to generate a control signal to control the movement and/or position of the servo-assisted device (1) or a moving part (5) thereof;
- the electronic control unit (1) comprises, and/or is operationally connected to, at least one memory unit (11) where first data and/or test instructions are stored to perform operation and/or status checks of the electronic control unit (10) and/or the servo-assisted device (1);
- the electronic control unit (1) comprises a first communication interface (12) adapted and configured to transmit data and/or information related to checks performed, in particular data and/or information related to the results of the checks performed.

2. An electronic control unit (10) according to claim 1, wherein the first communication interface (12) is a wired or wireless interface.

3. An electronic control unit (10) according to claim 2, wherein the first communication interface (12) is a wired interface and wherein the electronic control unit (10) comprises a second communication interface (13) which is a short-range wireless communication interface, preferably a Bluetooth communication interface.

4. An electronic control unit (10) according to claim 3, wherein the second communication interface (13) is removably couplable to the electronic control unit (10).

5. An electronic control unit (10) according to any one of the preceding claims, wherein the electronic control unit (10) is, or comprises, an FPGA and wherein the first data and/or test instructions are stored in a first memory area inside the FPGA.

6. An electronic control unit (10) according to claim 5, wherein the electronic control unit (10) comprises a second memory area outside the FPGA and wherein second data and/or test instructions, which are additional to the first data and/or test instructions, are stored or storable in said second memory area.

7. An electronic control unit (10) according to any one of the preceding claims, wherein the servo-assisted device (1) is, or comprises, an antenna of a missile seeker, or a video camera or a thermal camera.

8. An electronic control unit (10) according to any one of the preceding claims, wherein the aforesaid status and/or operation checks comprise one or more of the checks v1-v5 from the following list:
v1) Checking the integrity of the electronic control unit (10) ;
v2) Checking the integrity of the servo-assisted device (1) ;
v3) Checking the integrity of the aforesaid first data and/or test instructions, for example a parity check or checksum of the aforesaid first data and/or test instructions;
v4) Checking the presence and/or status and/or operation of one or more sensors (s1, s2) of the servo-assisted device (1);
v5) Checking the response of one or more actuators (7, 9) of the servo-assisted device (1) to control signals which are synthesized and provided by the electronic control unit (10) in accordance with one or more operation patterns.

9. An electronic control unit (10) according to any one of the preceding claims, wherein the servo-assisted device (1) comprises a support base (6) and a moving part (5) constrained to the support base (6) and adapted to be controlled by the electronic control unit (10) to be moved with respect to the support base (6) and wherein the electronic control unit is housed in the support base (6).

10. An electronic control unit (10) according to any one of the preceding claims, wherein the first communication interface (12) is adapted and configured to transmit said data and/or information to an external processing device.

11. An electronic control unit (10) according to claims 3 and 10, wherein said second communication interface (13), which is a short-range wireless communication interface, is adapted and configured to transmit said data and/or information to an external processing device.

12. An electronic control unit (10) according to claims 3 or 10, wherein the first communication interface (12) is a communication and power supply interface.

13. A system (100) comprising a servo-assisted device (1) for receiving and/or transmitting and/or reflecting electromagnetic radiations and an electronic control unit (10) according to any one of the preceding claims operatively connected to the servo-assisted device (1).

14. A system (100) according to claim 13, wherein the first communication interface (12) is a wired communication and power supply interface and is accessible and/or available for the connection to an external processing device only when the electronic control unit (10) and/or the servo-assisted device (1) have not yet been installed on, or integrated into, the system (100).

15. A system (100) according to claim 13 or 14, wherein the system (100) is an avionics system.
